(19) Europäisches Patentamt
European Patent Office
Office européen des brevets

(11) **EP 1 260 486 A1**

(12) **EUROPEAN PATENT APPLICATION**
published in accordance with Art. 158(3) EPC

(43) Date of publication:
27.11.2002  Bulletin 2002/48

(51) Int Cl.⁷: **C02F 3/12**, C02F 3/34

(21) Application number: 01906166.2

(86) International application number:
**PCT/JP01/01251**

(22) Date of filing: 21.02.2001

(87) International publication number:
**WO 01/062676 (30.08.2001 Gazette 2001/35)**

(84) Designated Contracting States:
**BE DE DK ES FI FR GB IT LU NL SE**

(30) Priority: 24.02.2000 JP 2000047634

(71) Applicant: EBARA CORPORATION
Ohta-ku, Tokyo 144-8510 (JP)

(72) Inventors:
• KATSU, Yousei
Fujisawa-shi, Kanagawa 251-0862 (JP)

• TANAKA, Toshihiro
Fujisawa-shi, Kanagawa 251-0861 (JP)
• KOBAYASHI, Takuya
Yokohama-shi, Kanagawa 224-0041 (JP)
• ARAKAWA, Kiyomi
Sagamihara-shi, Kanagawa 229-0036 (JP)

(74) Representative: Wagner, Karl H., Dipl.-Ing.
Wagner & Geyer,
Patentanwälte,
Gewürzmühlstrasse 5
80538 München (DE)

(54) **METHOD FOR TREATING ORGANIC WASTEWATER**

(57) An object of the present invention is to provide a process and a system for treating organic wastewater that can achieve volume reduction of excess sludge and improved effluent water quality at the same time as well as cost reduction in the overall wastewater treatment system without any danger of inviting the death of activated sludge. In order attain this object, the present invention relates to a process for biologically treating organic wastewater using a biological treatment system having a biological treatment tank and an activated sludge solids-liquid separation tank, comprising drawing a part of sludge from the biological treatment tank or the activated sludge solids-liquid separation tank to mix it with a part of influent raw water, injecting ozone gas into the mixed influent and introducing it into a pretreatment tank for ozone treatment and biological treatment, introducing the effluent from the pretreatment tank together with a part of sludge from the biological treatment tank or the activated sludge solids-liquid separation tank and the remainder of raw water into the downstream biological treatment tank, and introducing exhaust gas from the pretreatment tank into the biological treatment tank for biological treatment.

*Fig. 1*

EP 1 260 486 A1

**Description**

<u>TECHNICAL FIELD</u>

The present invention relates to organic wastewater treatment, particularly volume reduction of excess sludge in biological treatment processes, and more specifically it relates to organic wastewater treatment processes and systems that can be used for organic industrial and domestic wastewater.

<u>BACKGROUND ART</u>

In conventional activated sludge wastewater treatment processes, excess sludge undergoes a series of treatment/disposal steps involving drawing, thickening, dewatering, incineration, etc. before final removal outside the system. The cost incurred is so enormous to increase the running cost for the overall wastewater treatment. During the dewatering step of the sludge, complex maintenance also remains including appropriate chemical feed.

Recently, a process combining activated sludge treatment with sludge volume reduction was proposed, which comprises drawing sludge in the amount equal to or more than the amount of excess sludge from a clarifier or bioreactor aeration tank, introducing it into a separate ozone reaction tank to treat it by ozone injection, and returning the ozone-treated sludge to the bioreactor aeration tank where the ozone-treated sludge is partially degraded by biological treatment.

However, the sludge volume reduction process by ozone injection involves drawing grown sludge, i.e., more sludge than excess sludge from the system and injecting a high concentration ozone into it in an ozone reaction tank to oxidize it for volume reduction, and therefore, if the amount of sludge to be drawn decreases and ozone injection increases relative to the influent sludge into the ozone reaction tank, activated sludge may be killed in the ozone reaction tank, which sometimes results in the deterioration of water quality such as lowered sludge activity in the biological treatment tank and increased COD (Chemical Oxygen Demand) and SS (Suspended Solids) of the effluent. Moreover, exhaust gas from the ozone reaction tank must be treated in a separate ozone decomposition tank, which causes the problem of increasing the operation cost of the overall system because a high concentration of oxygen in the exhaust gas is not utilized but released outside the system when pure oxygen or an oxygen-rich gas is used to generate ozone.

The present invention is made to solve the above problems of the prior art and provides a process eliminating the danger of inviting the death of activated sludge because of the proper amount of sludge injected into the ozone treatment tank, so that sludge activity is maintained in the bioreactor tank and therefore, the COD and SS of the effluent can be efficiently lowered while exhaust gas from the ozone reaction tank can be effectively utilized to achieve volume reduction of excess sludge in the activated sludge treatment processes for organic wastewater as well as cost reduction in the overall wastewater treatment system.

<u>DISCLOSURE OF THE INVENTION</u>

As a result of studies to solve the above problems, we found that when sludge from an activated sludge solids-liquid separation tank or a biological treatment tank is mixed with a part of influent raw water during ozone treatment in a pretreatment tank for injecting ozone gas, nitrification reaction as a biological reaction proceeds better in the pretreatment tank than the case when sludge is treated alone with ozone, and therefore, we found that nitrification capacity can be improved by ozone treatment after mixing raw water and sludge. Noting that the gas discharged from the pretreatment tank after ozone treatment has a higher oxygen partial pressure than air because of the high concentration of oxygen, we also found that when this exhaust gas is supplied to the aeration tank (biological treatment tank), oxygen utilization efficiency increases and biodegradation is promoted with improved organic degradation, whereby SS, COD, BOD (Biochemical Oxygen Demand) or the like can be remarkably lowered and water quality can be improved. We also found that the cost for the overall wastewater treatment system can be reduced because any separate ozone decomposition tank is not required for treating residual ozone contained in the exhaust gas from the pretreatment tank and the high concentration of oxygen in the exhaust gas is completely effectively utilized, and finally we achieved the present invention on the basis of these findings.

Accordingly, the present invention has the following aspects.

(1) A process for biologically treating organic wastewater using a biological treatment system having a biological treatment tank and an activated sludge solids-liquid separation tank, comprising drawing a part of sludge from the biological treatment tank or the activated sludge solids-liquid separation tank to mix it with a part of influent raw water, injecting ozone gas into the mixed influent and introducing it into a pretreatment tank for ozone treatment and biological treatment, introducing the effluent from the pretreatment tank together with a part of sludge from the biological treatment tank or the activated sludge solids-liquid separation tank and the remainder of raw water into the downstream biological treatment tank, and introducing exhaust gas from the pretreatment tank into the biological treatment tank for biological treatment.

(2) A process for treating organic wastewater using a nitrification/denitrification activated sludge treatment system having a denitrification tank, a nitrification tank and an activated sludge solids-liquid separation tank, comprising drawing a part of sludge from the activated sludge solids-liquid separation tank or the denitrification tank or the nitrification tank to mix it with a part of influent raw water, injecting ozone gas into the mixed influent and introducing it into a pretreatment tank for ozone treatment and biological treatment, introducing the effluent from the pretreatment tank together with a part of sludge from the denitrification tank or the nitrification tank or the activated sludge solids-liquid separation tank and the remainder of raw water into the downstream denitrification tank for denitrification treatment, and introducing exhaust gas from the pretreatment tank into the nitrification tank for nitrification treatment.

(3) The process for treating organic wastewater as defined in 1 or 2 above characterized in that the amount of sludge supplied to the pretreatment tank is 5-50% of the total amount of sludge in the system.

(4) The process for treating organic wastewater as defined in 1 or 2 above characterized in that the ozone gas supplied to the pretreatment tank is generated from pure oxygen or an oxygen-rich gas.

(5) A system for biologically treating organic wastewater, comprising a pretreatment tank, a biological treatment tank and an activated sludge solids-liquid separation tank, and further comprising a piping for feeding influent raw water to the biological treatment tank, a means for drawing a part of sludge from the biological treatment tank or the activated sludge solids-liquid separation tank and feeding it to the pretreatment tank together with a part of influent raw water, an ozone gas feeder for injecting ozone gas into the sludge and influent raw water supplied to the pretreatment tank, a means for introducing the effluent from the pretreatment tank together with a part of sludge from the biological treatment tank or the activated sludge solids-liquid separation tank and the remainder of raw water into the downstream biological treatment tank, and a means for introducing exhaust gas from the pretreatment tank into the biological treatment tank.

According to the present invention, an activated sludge treatment system comprising a biological treatment tank and an activated sludge solids-liquid separation tank is provided wherein a part of sludge in the system is drawn from the activated sludge solids-liquid separation tank or the biological treatment tank and mixed with a part of influent raw water and ozone gas is injected into the mixed influent for ozone treatment in a pretreatment tank, whereby a part of feed sludge and raw water rapidly undergo oxidative degradation by ozone so that solubilization of sludge proceeds and the biodegradability of organics in raw water can be improved. In the pretreatment tank, biological treatment with microorganisms in feed sludge takes place at the same time.

As used above, the pretreatment tank refers to a tank in which the sludge in the system and raw water supplied to this tank undergo oxidative degradation with ozone and biological treatment, and the designation comes from the fact that it precedes the activated sludge treatment system comprising a biological treatment tank and an activated sludge solids-liquid separation tank that are called downstream tanks.

In the system of the present invention, the amount of sludge supplied to the pretreatment tank is preferably 5-50% of the total amount of sludge in the system. This is because volume reduction of excess sludge is insufficient below 5% while the effluent water quality deteriorates above 50%.

In the system of the present invention, the ozone gas supplied to the pretreatment tank can be rich in oxygen to maintain high dissolved oxygen in the pretreatment tank, thus allowing degradation of a part of organics in raw water as well as nitrification of $NH_4$-N.

The effluent from ozone treatment and biological treatment in the pretreatment tank as described above is introduced into the downstream biological treatment tank together with return sludge from the activated sludge solids-liquid separation tank or the biological treatment tank and raw water, whereby not only organics in raw water but also liquid organics from solubilized sludge can be utilized as necessary carbon sources for denitrification in the biological treatment tank, with the result that a stable denitrification speed can be maintained with improved denitrification performance and liquefied organics from denitrified sludge can also be degraded, thus greatly contributing to sludge reduction.

In the present invention, exhaust gas from the pretreatment tank is supplied to the downstream biological treatment tank, so that a high concentration of oxygen contained in the exhaust gas can be used as oxygen for BOD degradation and nitrification of $NH_4$-N in the biological treatment tank, thus eliminating any need for feeding fresh oxygen and accordingly, eliminating any need for an aeration blower in the biological treatment tank, thus providing a great benefit for saving energy.

A part of raw water undergoes ozone treatment and biological treatment in the pretreatment tank, whereby the biodegradability of organics is improved and the degradation efficiency of organics in the biological treatment tank increases to improve the effluent water quality. Moreover, liquefied organics from sludge are also degraded in the biological treatment tank, so that sludge growth in the system can be inhibited.

The activated sludge solids-liquid separator used in the present invention is not limited to a clarifier but may also be a membrane separator or any activated sludge solids-liquid separator known in the art. The biological treatment process is not limited to the standard activated sludge process but may also be any other biological treatment processes known in the art such as oxidation ditch process, circulated nitrification/denitrification activated sludge process, intermittently aerated activated sludge process, biological phosphorus removal process, biological phosphorus/nitrogen simultaneous removal process, etc.

BRIEF EXPLANATION OF THE DRAWINGS

FIG. 1 is a flow sheet of one example of a process for treating organic wastewater according to the present invention.
FIG. 2 is a graph showing plots of the amount of sludge in the wastewater treatment system versus time in one example of the present invention.
FIG. 3 is a flow sheet of one example of a process for treating organic wastewater according to the present invention.
FIG. 4 is a flow sheet of one example of a process for treating organic wastewater according to the present invention.
FIG. 5 is a graph showing plots of the amount of sludge in the wastewater treatment system versus time in one example of the present invention.
FIG. 6 is a flow sheet of one example of a process for treating organic wastewater according to the present invention.
FIG. 7 is a graph showing plots of the amount of sludge in the wastewater treatment system versus time in one example of the present invention.
Numerical references in the drawings represent the following elements: 1: influent raw water into pretreatment tank; 2: PSA ozone generator; 3: ozone gas; 4: ejector; 5: pretreatment tank; 6: influent sludge into pretreatment tank; 7: ejector circulation pump; 8: pretreatment tank effluent; 9: pretreatment tank exhaust gas; 10: return sludge from clarifier; 11: influent raw water into aeration tank; 12: influent raw water into denitrification tank; 13: denitrification tank; 14: denitrification tank stirrer; 15: aeration tank; 16: circulating liquid; 17: pretreatment exhaust gas feed pipe; 18: aeration tank stirrer; 19: aeration tank outlet sludge; 20: clarifier; 21: effluent; 22: axial flow pump.
The following examples further illustrate the present invention without, however, limiting the invention thereto.

Example 1

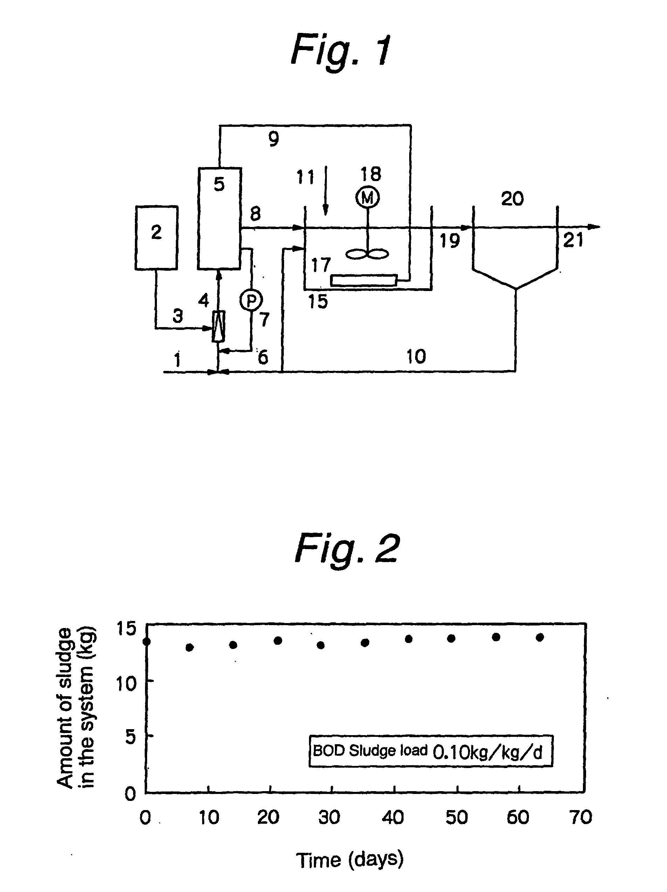

Fig. 1 shows a flow sheet of one example of the standard activated sludge process for sewage from housing complex according to the present invention. Pretreatment tank influent raw water 1 in the amount of about 15% of the total influent raw water is supplied to pretreatment tank 5 together with pretreatment tank influent sludge 6 drawn from clarifier 21 in the amount of about 45% of sludge in the system. At the same time, ozone gas 3 from PSA ozone generator 2 is injected into pretreatment tank 5 via ejector 4. Reference 7 represents an ejector circulation pump.
Pretreatment tank effluent 8 from ozone treatment and biological treatment in pretreatment tank 5 is introduced into aeration tank 15 together with return sludge 10 from clarifier 20 and aeration tank influent raw water 11. In aeration tank 15, degradation of organics and nitrification of $NH_4$-N take place by the action of microorganisms in activated sludge contained in the tank.
Here, exhaust gas 9 containing a high concentration of oxygen from pretreatment tank 5 is introduced into aeration tank 15 via exhaust gas feed pipe 17 and thus supplied high concentration of oxygen is homogenized by aeration tank stirrer 18 to provide necessary oxygen for degradation of organics and nitrification of $NH_4$-N in aeration tank 15. Aeration tank outlet sludge 19 from aeration tank 15 is sent to clarifier (solids-liquid separation tank) 20 where it is separated into solids and liquid to give effluent 21.
Table 1 below shows treatment conditions in the pretreatment tank in Example 1. The treatment conditions were as follows. Ozone gas having an ozone concentration of 67 mg/L generated in PSA ozone generator 2 from a feedstock gas consisting of an oxygen gas at an oxygen concentration of 96 vol % was injected at a flow rate of 3.0 L/min into the pretreatment tank with a retention time of about 0.5 hours in the pretreatment tank.

Table 1:

| Treatment conditions in pretreatment tank in Example 1 | | |
|---|---|---|
| Description | Inlet | Outlet |
| Ozone gas flow rate (L/min) | 3.0 | 3.0 |
| Ozone concentration (mg/L) | 67 | <0.1 |
| Oxygen concentration (vol %) | 96 | 95 |
| Raw water flow rate ($m^3$/d) | 3.0 | - |
| Return sludge flow rate to pretreatment tank ($m^3$/d) | 0.6 | - |
| Retention time in pretreatment tank (h) | 0.5 | - |

Table 2 below shows the results of the treatment in the pretreatment tank under the conditions above. The SS of 2690 mg/L at the inlet of the pretreatment tank was lowered to 2360 mg/L after treatment at a sludge liquefaction degree of about 12%. The sludge liquefaction degree was calculated by the equation below.

$$\text{Sludge liquefaction degree} = [(\text{SS after treatment} - \text{SS before treatment}) / \text{SS before treatment}] \times 100\%$$

S-$COD_{Mn}$ (Soluble Chemical Oxygen Demand: soluble oxygen consumption by potassium permanganate at 100 °C) and S-$BOD_5$ (Soluble Biochemical Oxygen Demand) were 40 mg/L and 35 mg/L, respectively, before treatment, but increased to 150 mg/L and 170 mg/L, respectively, after treatment. This seems to result from the liquefaction of organics in SS and improved biodegradability of organics in raw water.

After pretreatment, $NH_4$-N decreased from 17 mg/L to 7.4 mg/L and $NO_x$-N increased from 4.9 mg/L to 18 mg/L, showing that nitrification reaction occurred.

Table 2:

| Treatment results in the pretreatment tank in Example 1 | | |
|---|---|---|
| Description | Inlet | Outlet |
| pH | 7.4 | 7.1 |
| SS (mg/L) | 2690 | 2360 |
| S-$COD_{Mn}$ (mg/L) | 40 | 150 |
| S-$BOD_5$ (mg/L) | 35 | 170 |
| $NH_4$-N (mg/L) | 17 | 7.4 |
| $NO_x$-N (mg/L) | 4.9 | 18 |

Table 3 below shows treatment conditions in the biological treatment tank in Example 1. Here, MLSS refers to Mixed Liquor Suspended Solids. Table 4 below shows the water quality of raw water and effluent 21 discharged from the clarifier.

Influent raw water had SS of 80 mg/L, $COD_{Mn}$ of 65 mg/L, $BOD_5$ of 80 mg/L, $NH_4$-N of 23 mg/L and T-N (Total Nitrogen) of 35 mg/L, in contrast to the effluent having SS of 9.5 mg/L, $COD_{Mn}$ of 14 mg/L, $BOD_5$ of 6.2 mg/L and T-N of 22 mg/L, showing that stable good effluent water quality was obtained. The effluent had $NH_4$-N of 0.1 mg/L or less, showing that nitrification also proceeded well.

Table 3:

| Treatment conditions in the biological treatment tank in Example 1 | |
|---|---|
| Description | Conditions |
| Water flow rate ($m^3$/d) | 18 |

Table 3: (continued)

| Treatment conditions in the biological treatment tank in Example 1 | |
|---|---|
| Description | Conditions |
| Return sludge flow rate (m$^3$/d) | 9 |
| MLSS (mg/L) | 3500 |
| BOD load (kg/kg.d) | 0.10 |

Table 4:

| Water quality of raw water and effluent in Example 1 | | |
|---|---|---|
| Description | Inlet | Outlet |
| pH | 7.1 | 7.6 |
| SS (mg/L) | 80 | 9.5 |
| $COD_{Mn}$ (mg/L) | 65 | 14 |
| $BOD_5$ (mg/L) | 80 | 6.2 |
| $NH_4$-N (mg/L) | 23 | <0.1 |
| $NO_x$-N (mg/L) | <0.1 | 19 |
| T-N (mg/L) | 35 | 22 |

Fig. 2 shows plots of the amount of sludge in the system versus time in the treatment system of Example 1. When the total tank BOD load by raw water was 0.10 kg/kg.d, the amount of sludge in the system was almost constant at about 13.0-13.9 kg with little increase during the treatment period of about 2 months, showing that the use of the pretreatment with ozone has a remarkable sludge volume reduction effect.

Example 2

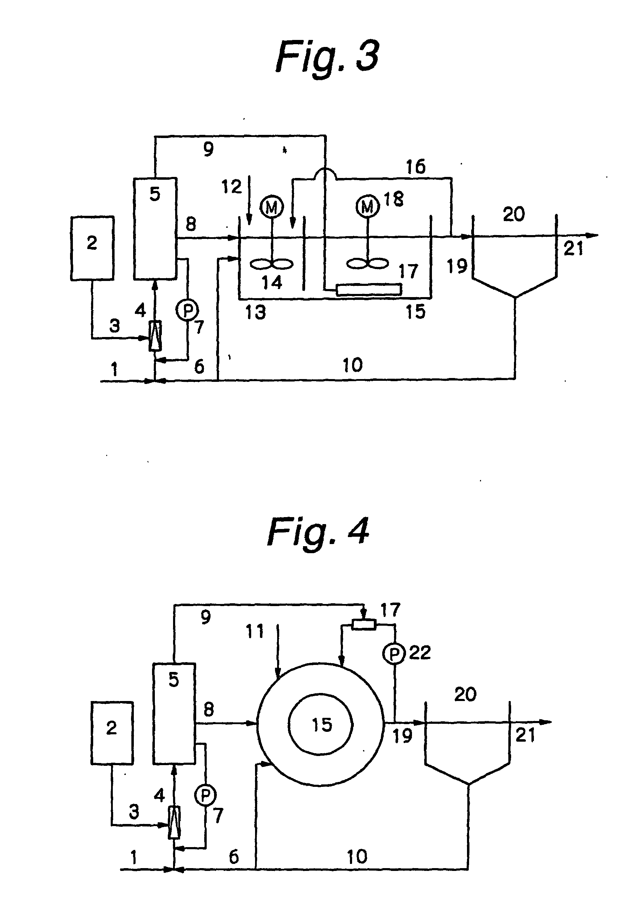

Fig. 3 shows a flow sheet of one example of the nitrification/denitrification activated sludge treatment process for sewage from housing complex according to the present invention.

The treatment flow shown in Fig. 3 differs from the treatment flow shown in Fig. 1 in that denitrification tank 13 is provided upstream of aeration tank 15 in Fig. 3. In the system shown in Fig. 3, pretreatment tank effluent 8 from ozone treatment and biological treatment in pretreatment tank 5 is introduced into denitrification tank 13 together with return sludge and denitrification tank influent raw water 12. In denitrification tank 13, mixing takes place by stirring with denitrification tank stirrer 14 so that nitrate nitrogen and nitrite nitrogen are reduced into nitrogen gas by the action of denitrification bacteria contained in activated sludge in the tank. Then, the effluent is transferred to aeration tank 15 downstream of denitrification tank 13 and undergoes degradation of organics in the denitrified liquid and nitrification of $NH_4$-N by the action of microorganisms in activated sludge contained in the tank. In aeration tank 15, exhaust gas 9 containing a high concentration of oxygen from pretreatment tank 5 is introduced via exhaust gas feed pipe 17 and thus supplied high concentration of oxygen is homogenized by aeration tank stirrer 18 to provide necessary oxygen for degradation of organics and nitrification of $NH_4$-N in aeration tank 15. A given amount (preferably, 100-500% relative to the amount of raw water) of activated sludge mixed liquid is returned as circulating liquid 16 from aeration tank 15 to denitrification tank 13 where $NO_x$-N in the activated sludge mixed liquid also undergoes denitrification treatment. Aeration tank outlet sludge 19 from aeration tank 15 is sent to clarifier 20 where it is separated into solids and liquid to give effluent 21.

The treatment flow in Example 2 was followed under the same treatment conditions as in Example 1 such as ozone gas flow rate in pretreatment tank 5 to give similar treatment results to those of Example 1.

Operation was run under the same treatment conditions as in Example 1 such as water flow rate in biological treatment tanks (denitrification tank and aeration tank) in Example 2 except that the circulation flow rate from aeration tank 15 to denitrification tank 13 was 36 m$^3$/d, which is about twice the raw water flow rate. Table 5 below shows the water quality results of raw water and effluent.

The same influent raw water as in Example 1 was treated and stable good effluent water quality was obtained as measured by SS of 6.0 mg/L, $COD_{Mn}$ of 12 mg/L, $BOD_5$ of 5.8 mg/L and T-N of 12 mg/L. The effluent had $NH_4$-N

of 0.1 mg/L and NO$_x$-N of 9.5 mg/L, showing that both nitrification and denitrification gave good results.

Table 5:

| Water quality of raw water and effluent in Example 2 | | |
|---|---|---|
| Description | Inlet | Outlet |
| pH | 7.1 | 7.6 |
| SS (mg/L) | 80 | 6.0 |
| COD$_{Mn}$ (mg/L) | 65 | 12 |
| BOD$_5$ (mg/L) | 80 | 5.8 |
| NH$_4$-N (mg/L) | 23 | <0.1 |
| NO$_x$-N (mg/L) | <0.1 | 9.5 |
| T-N (mg/L) | 35 | 12 |

When the total tank BOD load by raw water was 0.10 kg/kg.d, the amount of sludge in the system was almost constant during the treatment period of about 2 months, showing that the nitrification/denitrification activated sludge process of Example 2 has a sludge volume reduction effect almost comparable to that of the standard activated sludge process of Example 1.

Example 3

Fig. 4 shows a flow sheet of one example of the oxidation ditch process for sewage from housing complex according to another embodiment of the present invention.
Pretreatment tank influent raw water 1 in the amount of about 15% of the total influent raw water is supplied to pretreatment tank 5 together with pretreatment tank influent sludge 6 drawn from clarifier 21 in the amount of about 33% of sludge in the system. At the same time, ozone gas 3 from PSA ozone generator 2 is injected into pretreatment tank 5 via ejector 4.
Pretreatment tank effluent 8 from ozone treatment and biological treatment in pretreatment tank 5 is introduced into aeration tank 15 together with return sludge 10 from clarifier 20 and aeration tank influent raw water 11. In aeration tank 15, degradation of organics and nitrification of NH$_4$-N take place by the action of microorganisms in activated sludge contained in the tank.
In order to dissolve exhaust gas 9 containing a high concentration of oxygen from pretreatment tank 5 in an activated sludge mixed liquid in exhaust gas feeder 17, the activated sludge mixed liquid from aeration tank 15 is supplied to exhaust gas feeder 17 via axial flow pump 22 and then returned to aeration tank 15. Thus supplied high concentration of oxygen is homogenized by aeration tank stirrer 18 to provide necessary oxygen for degradation of organics and nitrification of NH$_4$-N in aeration tank 15. Aeration tank outlet sludge 19 from aeration tank 15 is sent to a clarifier 20 where it is separated into solids and liquid to give effluent 21.
Table 6 below shows treatment conditions in the pretreatment tank in Example 3. The treatment conditions were as follows. Ozone gas having an ozone concentration of 67 mg/L generated in a PSA ozone generator 2 from a feedstock gas consisting of an oxygen gas at an oxygen concentration of 96 vol % was injected at a flow rate of 3.0 L/min into the pretreatment tank with a retention time of about 0.5 hours in the pretreatment tank.

Table 6:

| Treatment conditions in the pretreatment tank in Example 3 | | |
|---|---|---|
| Description | Inlet | Outlet |
| Ozone gas flow rate (L/min) | 3.0 | 3.0 |
| Ozone concentration (mg/L) | 67 | <0.1 |
| Oxygen concentration (vol %) | 96 | 95 |
| Raw water flow rate (m$^3$/d) | 3.0 | - |
| Return sludge flow rate to pretreatment tank (m$^3$/d) | 1.38 | - |
| Retention time in pretreatment tank (h) | 0.5 | - |

Table 7 below shows the results of the treatment in the pretreatment tank under the conditions above. The SS of 2690 mg/L at the inlet of the pretreatment tank was lowered to 2030 mg/L after treatment at a sludge liquefaction degree of about 10%.

S-$COD_{Mn}$ and S-$BOD_5$ were 37 mg/L and 32 mg/L, respectively, before treatment, but increased to 120 mg/L and 130 mg/L, respectively, after treatment. This seems to result from the liquefaction of organics in SS and improved biodegradability of organics in raw water.

Table 7:

| Treatment results in the pretreatment tank in Example 3 | | |
|---|---|---|
| Description | Inlet | Outlet |
| pH | 7.1 | 6.8 |
| SS (mg/L) | 2260 | 2030 |
| S-$COD_{Mn}$ (mg/L) | 37 | 120 |
| S-$BOD_5$ (mg/L) | 32 | 130 |

Table 8 below shows treatment conditions in the biological treatment tank in Example 3. Table 9 below shows the water quality of raw water and effluent 21 discharged from the clarifier.

The same influent raw water as in Example 1 was treated and stable good effluent water quality was obtained as measured by SS of 11 mg/L, $COD_{Mn}$ of 13 mg/L and $BOD_5$ of 5.6 mg/L. The effluent had $NH_4$-N of 0.1 mg/L or less, showing that nitrification also proceeded well.

Table 8:

| Treatment conditions in the biological treatment tank in Example 3 | |
|---|---|
| Description | Conditions |
| Water flow rate ($m^3$/d) | 18 |
| Return sludge flow rate ($m^3$/d) | 18 |
| MLSS (mg/L) | 3500 |
| BOD load (kg/kg.d) | 0.05 |

Table 9:

| Water quality of raw water and effluent in Example 3 | | |
|---|---|---|
| Description | Inlet | Outlet |
| pH | 7.1 | 7.5 |
| SS (mg/L) | 80 | 11 |
| $COD_{Mn}$ (mg/L) | 65 | 13 |
| $BOD_5$ (mg/L) | 80 | 5.6 |
| $NH_4$-N (mg/L) | 23 | <0.1 |
| $NO_x$-N (mg/L) | <0.1 | 20 |
| T-N (mg/L) | 35 | 24 |

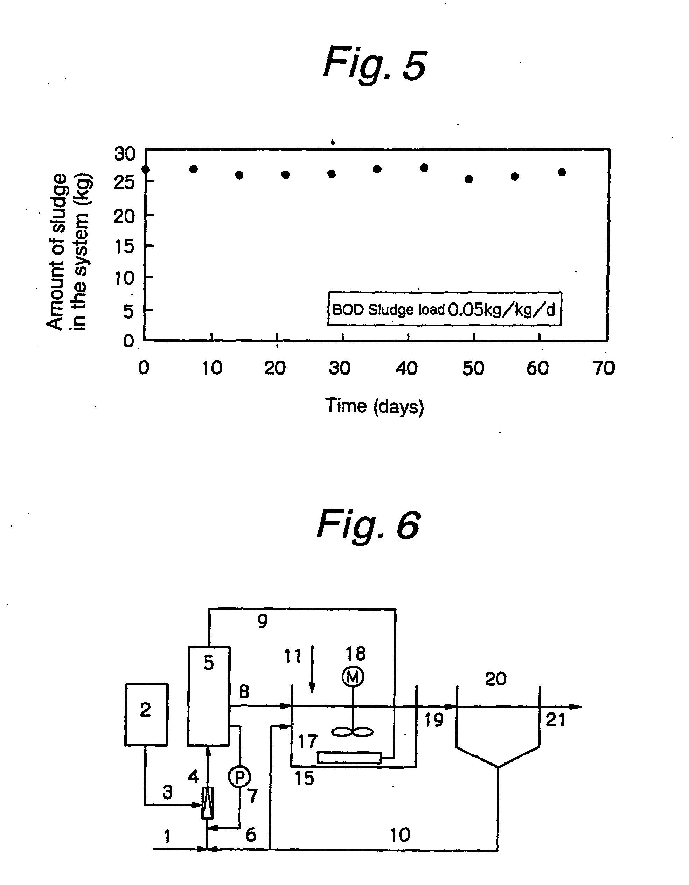

Fig. 5 shows plots of the amount of sludge in the system versus time in the treatment system of Example 3. When the total tank BOD load by raw water was 0.05 kg/kg.d, the amount of sludge in the system was almost constant at about 27.5-29.0 kg with little increase during the treatment period of about 2 months, showing that the use of the pretreatment with ozone also has a remarkable sludge volume reduction effect in the oxidation ditch process.

Example 4

Fig. 6 shows a flow sheet of one example of the intermittently aerated activated sludge process for sewage from housing complex according to the present invention. Pretreatment tank influent raw water 1 in the amount of about 15% of the total influent raw water is supplied to pretreatment tank 5 together with pretreatment tank influent sludge 6 drawn from clarifier 21 in the amount of about 33% of sludge in the system. At the same time, ozone gas 3 from PSA ozone generator 2 is injected into pretreatment tank 5 via ejector 4.

Pretreatment tank effluent 8 from ozone treatment in pretreatment tank 5 is introduced into aeration tank 15 together with return sludge 10 from clarifier 20 and aeration tank influent raw water 11. In aeration tank 15, degradation of organics and nitrification of $NH_4$-N take place by the action of microorganisms in activated sludge contained in the tank.

Here, exhaust gas 9 containing a high concentration of oxygen from pretreatment tank 5 is intermittently introduced into aeration tank 15 via exhaust gas feed pipe 17 and thus supplied high concentration of oxygen is homogenized by aeration tank stirrer 18 to provide necessary oxygen for degradation of organics and nitrification of $NH_4$-N in aeration tank 15. Intermittent aeration from exhaust gas feed pipe 17 preferably lasts for about 30 minutes at intervals of about 60 minutes, for example. Aeration tank outlet sludge 19 from aeration tank 15 is sent to a clarifier 20 where it is separated into solids and liquid to give effluent 21.

Table 10 below shows treatment conditions in the pretreatment tank in Example 4. The treatment conditions were as follows. Ozone gas having an ozone concentration of 67 mg/L generated in a PSA ozone generator 2 from a feedstock gas consisting of an oxygen gas at an oxygen concentration of 96 vol % was injected at a flow rate of 3.0 L/min into the pretreatment tank with a retention time of about 0.5 hours in the pretreatment tank.

Table 10:

| Treatment conditions in the pretreatment tank in Example 4 | | |
|---|---|---|
| Description | Inlet | Outlet |
| Ozone gas flow rate (L/min) | 3.0 | 3.0 |
| Ozone concentration (mg/L) | 67 | <0.1 |
| Oxygen concentration (vol %) | 96 | 95 |
| Raw water flow rate ($m^3$/d) | 3.0 | - |
| Return sludge flow rate to pretreatment tank ($m^3$/d) | 1.6 | - |
| Retention time in pretreatment tank (h) | 0.5 | - |

Table 11 below shows the results of the treatment in the pretreatment tank under the conditions above. The SS of 2070 mg/L at the inlet of the pretreatment tank was lowered to 1860 mg/L after treatment at a sludge liquefaction degree of about 10%.

S-$COD_{Mn}$ and S-$BOD_5$ were 36 mg/L and 31 mg/L, respectively, before treatment, but increased to 110 mg/L and 120 mg/L, respectively, after treatment. This seems to result from the liquefaction of organics in SS and improved biodegradability of organics in raw water.

Table 11:

| Treatment results in the pretreatment tank in Example 4 | | |
|---|---|---|
| Description | Inlet | Outlet |
| pH | 7.3 | 7.0 |
| SS (mg/L) | 2070 | 1860 |
| S-$COD_{Mn}$ (mg/L) | 36 | 110 |
| S-$BOD_5$ (mg/L) | 31 | 120 |

Table 12 below shows treatment conditions in the biological treatment tank in Example 4. Table 13 below shows the water quality of raw water and effluent 21 discharged from the clarifier.

The same influent raw water as in Example 1 was treated and stable good effluent water quality was obtained as measured by SS of 14 mg/L, $COD_{Mn}$ of 12 mg/L, $BOD_5$ of 5.1 mg/L and T-N of 15 mg/L. The effluent had $NH_4$-N

of 0.1 mg/L or less and $NO_x$-N of 12 mg/L, showing that nitrification/denitrification also proceeded well.

Table 12:

| Treatment conditions in the biological treatment tank in Example 4 | |
|---|---|
| Description | Conditions |
| Water flow rate ($m^3$/d) | 18 |
| Return sludge flow rate ($m^3$/d) | 27 |
| MLSS (mg/L) | 3500 |
| BOD load (kg/kg.d) | 0.05 |
| Exhaust gas feed period (h/d) | 12.0 |

Table 13:

| Water quality of raw water and effluent in Example 4 | | |
|---|---|---|
| Description | Inlet | Outlet |
| pH | 7.1 | 7.6 |
| SS (mg/L) | 80 | 14 |
| $COD_{Mn}$ (mg/L) | 65 | 12 |
| $BOD_5$ (mg/L) | 80 | 5.1 |
| $NH_4$-N (mg/L) | 23 | <0.1 |
| $NO_x$-N (mg/L) | <0.1 | 12.0 |
| T-N (mg/L) | 35 | 14.8 |

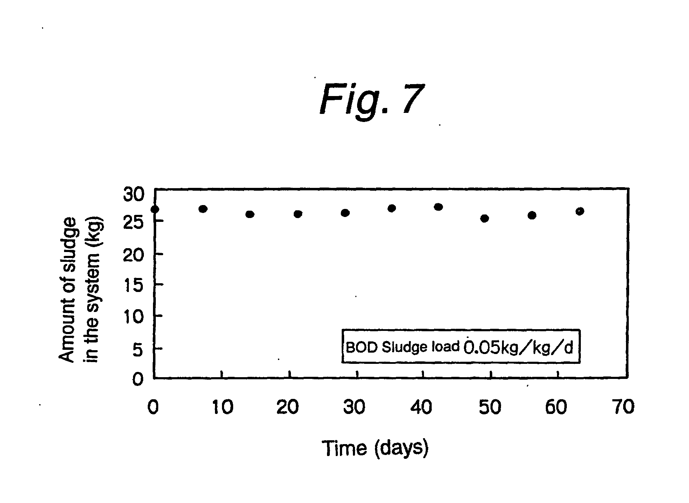

Fig. 7 shows plots of the amount of sludge in the system versus time in the treatment system of Example 4. When the total tank BOD load by raw water was 0.05 kg/kg.d, the amount of sludge in the system was almost constant at about 25.4-27.2 kg with little increase during the treatment period of about 2 months, showing that the use of the pretreatment with ozone also has a remarkable sludge volume reduction effect in the intermittently aerated activated sludge process.

Comparative example 1

Treatment experiences were performed according to the treatment flow of Example 1 without feeding raw water to pretreatment tank 5 for ozone treatment.
Treatment results in pretreatment tank 5 are shown in Table 14 below. In Comparative example 1 where return sludge is supplied alone to pretreatment tank 5 for ozone treatment, no increase in $NH_4$-N and no decrease in $NO_x$-N were observed. This confirmed that nitrification reaction in the pretreatment tank is promoted by feeding raw water to pretreatment tank 5.

Table 14:

| Treatment results in the pretreatment tank in Comparative example 1 | | |
|---|---|---|
| Description | Inlet | Outlet |
| pH | 7.3 | 7.1 |
| SS (mg/L) | 3500 | 3070 |
| $S\text{-}COD_{Mn}$ (mg/L) | 10 | 140 |
| $S\text{-}BOD_5$ (mg/L) | 5 | 150 |
| $NH_4$-N (mg/L) | <0.1 | 0.6 |
| $NO_x$-N (mg/L) | 19 | 23 |

Table 15 below shows the water quality of effluent 21 in Comparative example 1.

Starting from influent raw water having the same water quality as in Example 1, the effluent had SS of 15 mg/L, $COD_{Mn}$ of 23 mg/L and $BOD_5$ of 12 mg/L, all of which were higher than in Example 1. T-N of 15 mg/L shows that stable good effluent water quality was obtained. However, no increase was observed in the amount of sludge in the system and the excess sludge volume reduction effect was comparable to that of Example 1.

Table 15:

| Water quality of raw water and effluent in Comparative example 1 | | |
|---|---|---|
| Description | Inlet | Outlet |
| pH | 7.1 | 7.3 |
| SS (mg/L) | 80 | 15 |
| $COD_{Mn}$ (mg/L) | 65 | 23 |
| $BOD_5$ (mg/L) | 80 | 12 |
| $NH_4$-N (mg/L) | 23 | 0.8 |
| $NO_x$-N (mg/L) | <0.1 | 19 |
| T-N (mg/L) | 35 | 23 |

Comparative example 2

Treatment experiences were performed according to the treatment flow of Example 1 except that about 60% of the amount of sludge in the system was supplied to pretreatment tank 5 for ozone treatment. Table 16 below shows the water quality of the effluent in Comparative example 2.

Starting from influent raw water having the same water quality as in Example 1, the water quality of the effluent deteriorated as measured by SS of 18 mg/L, $COD_{Mn}$ of 29 mg/L and $BOD_5$ of 16 mg/L, all of which were twice or more higher than in Example 1. The effluent had $NH_4$-N of 3.5 mg/L and $NO_x$-N of 12 mg/L, namely more $NH_4$-N remains than in Example 1 and $NO_x$-N also increased, which suggests that nitrification and denitrification performances were also lowered. The amount of sludge in the system increased during the treatment period, showing that sludge volume reduction effect also deteriorated.

Table 16:

| Water quality of raw water and effluent in Comparative example 2 | | |
|---|---|---|
| Description | Inlet | Outlet |
| pH | 7.1 | 7.2 |
| SS (mg/L) | 80 | 18 |
| $COD_{Mn}$ (mg/L) | 65 | 29 |
| $BOD_5$ (mg/L) | 80 | 16 |
| $NH_4$-N (mg/L) | 23 | 3.5 |
| $NO_x$-N (mg/L) | <0.1 | 21 |
| T-N (mg/L) | 35 | 26 |

Comparative example 3

Treatment experiences were performed according to the treatment flow of Example 2 without feeding raw water to pretreatment tank 5 for ozone treatment. Table 17 below shows the water quality of the effluent in Comparative example 3.

Starting from influent raw water having the same water quality as in Example 2, the effluent had SS of 16 mg/L, $COD_{Mn}$ of 22 mg/L, $BOD_5$ of 12 mg/L and T-N of 15 mg/L, all of which were higher than in Example 2. However, no increase was observed in the amount of sludge in the system and the excess sludge volume reduction effect was comparable to that of Example 2.

Table 17:

| Water quality of raw water and effluent in Comparative example 3 | | |
|---|---|---|
| Description | Inlet | Outlet |
| pH | 7.1 | 7.4 |
| SS (mg/L) | 80 | 16 |
| $COD_{Mn}$ (mg/L) | 65 | 22 |
| $BOD_5$ (mg/L) | 80 | 12 |
| $NH_4$-N (mg/L) | 23 | 0.5 |
| $NO_x$-N (mg/L) | <0.1 | 9.5 |
| T-N (mg/L) | 35 | 15 |

Comparative example 4

Treatment experiences were performed according to the treatment flow of Example 3 without feeding raw water to pretreatment tank 5 for ozone treatment. Table 18 below shows the water quality of the effluent in Comparative example 4.

Starting from influent raw water having the same water quality as in Example 3, the effluent had SS of 17 mg/L, $COD_{Mn}$ of 21 mg/L and $BOD_5$ of 13 mg/L, all of which were higher than in Example 3. Moreover, 1.0 mg/L of $NH_4$-N remained in the effluent, showing that nitrification did not completely proceed. However, no increase was observed in the amount of sludge in the system and the excess sludge volume reduction effect was comparable to that of Example 3.

Table 18:

| Water quality of raw water and effluent in Comparative example 4 | | |
|---|---|---|
| Description | Inlet | Outlet |
| pH | 7.1 | 7.4 |
| SS (mg/L) | 80 | 17 |
| $COD_{Mn}$ (mg/L) | 65 | 21 |
| $BOD_5$ (mg/L) | 80 | 13 |
| $NH_4$-N (mg/L) | 23 | 1.0 |
| $NO_x$-N (mg/L) | <0.1 | 21 |
| T-N (mg/L) | 35 | 25 |

Comparative example 5

Treatment experiences were performed according to the treatment flow of Example 4 without feeding raw water to pretreatment tank 5 for ozone treatment. Table 19 below shows the water quality of the effluent in Comparative example 5.

Starting from influent raw water having the same water quality as in Example 4, the effluent had SS of 16 mg/L, $COD_{Mn}$ of 18 mg/L and $BOD_5$ of 11 mg/L, all of which were higher than in Example 4. Moreover, 1.2 mg/L of $NH_4$-N remained in the effluent, showing that nitrification did not completely proceed. However, no increase was observed in the amount of sludge in the system and the excess sludge volume reduction effect was comparable to that of Example 4.

Table 19:

| Water quality of raw water and effluent in Comparative example 5 | | |
|---|---|---|
| Description | Inlet | Outlet |
| pH | 7.1 | 7.2 |
| SS (mg/L) | 80 | 16 |

Table 19: (continued)

| Water quality of raw water and effluent in Comparative example 5 | | |
|---|---|---|
| Description | Inlet | Outlet |
| $COD_{Mn}$ (mg/L) | 67 | 18 |
| $BOD_5$ (mg/L) | 81 | 11 |
| $NH_4$-N (mg/L) | 23 | 1.2 |
| $NO_x$-N (mg/L) | <0.1 | 12 |
| T-N (mg/L) | 35 | 17 |

INDUSTRIAL APPLICABILITY

According to the present invention, a biological treatment system comprising a biological treatment tank and an activated sludge solids-liquid separation tank is provided wherein a part of sludge from the activated sludge solids-liquid separation tank or the biological treatment tank is introduced into a pretreatment tank together with a part of influent raw water for ozone treatment and biological treatment, whereby a part of feed sludge and raw water undergo oxidative degradation by ozone so that solubilization of sludge proceeds and the biodegradability of organics in raw water can be improved, and moreover, organics are degraded by microorganisms. The effluent from ozone treatment and biological treatment in the pretreatment tank is introduced into the downstream biological treatment tank together with return sludge and raw water, whereby liquefied organics can also be degraded, thus contributing to sludge reduction. Exhaust gas from the pretreatment tank is injected into the biological treatment tank, so that a high concentration of oxygen contained in the exhaust gas can be used as oxygen for BOD degradation and nitrification of $NH_4$-N in the biological treatment tank, thereby eliminating any need for feeding fresh oxygen and accordingly, eliminating any need for an aeration blower in the biological treatment tank, thus providing a great benefit for saving energy. In the case a nitrification/denitrification activated sludge treatment system wherein the biological treatment tank comprises a nitrification tank and a denitrification tank, the effluent from the pretreatment tank is introduced into the denitrification tank together with return sludge and raw water, whereby not only organics in raw water but also liquefied organics from solubilized sludge can be utilized as necessary carbon sources for denitrification, with the result that a stable denitrification speed can be maintained with improved denitrification performance and liquefied organics from denitrified sludge can also be degraded, thus contributing to sludge reduction.

**Claims**

1.  A process for biologically treating organic wastewater using a biological treatment system having a biological treatment tank and an activated sludge solids-liquid separation tank, comprising drawing a part of sludge from the biological treatment tank or the activated sludge solids-liquid separation tank to mix it with a part of influent raw water, injecting ozone gas into the mixed influent and introducing it into a pretreatment tank for ozone treatment and biological treatment, introducing the effluent from the pretreatment tank together with a part of sludge from the biological treatment tank or the activated sludge solids-liquid separation tank and the remainder of raw water into the downstream biological treatment tank, and introducing exhaust gas from the pretreatment tank into the biological treatment tank for biological treatment.

2.  A process for treating organic wastewater using a nitrification/denitrification activated sludge treatment system having a denitrification tank, a nitrification tank and an activated sludge solids-liquid separation tank, comprising drawing a part of sludge from the activated sludge solids-liquid separation tank or the denitrification tank or the nitrification tank to mix it with a part of influent raw water, injecting ozone gas into the mixed influent and introducing it into a pretreatment tank for ozone treatment and biological treatment, introducing the effluent from the pretreatment tank together with a part of sludge from the denitrification tank or the nitrification tank or the activated sludge solids-liquid separation tank and the remainder of raw water into the downstream denitrification tank for denitrification treatment, and introducing exhaust gas from the pretreatment tank into the nitrification tank for nitrification treatment.

3.  The process for treating organic wastewater of claim 1 or 2 **characterized in that** the amount of sludge supplied to the pretreatment tank is 5-50% of the total amount of sludge in the system.

4. The process for treating organic wastewater of claim 1 or 2 **characterized in that** the ozone gas supplied to the pretreatment tank is generated from pure oxygen or an oxygen-rich gas.

5. A system for biologically treating organic wastewater, comprising a pretreatment tank, a biological treatment tank and an activated sludge solids-liquid separation tank, and further comprising a piping for feeding influent raw water to the biological treatment tank, a means for drawing a part of sludge from the biological treatment tank or the activated sludge solids-liquid separation tank and feeding it to the pretreatment tank together with a part of influent raw water, an ozone gas feeder for injecting ozone gas into the sludge and influent raw water supplied to the pretreatment tank, a means for introducing the effluent from the pretreatment tank together with a part of sludge from the biological treatment tank or the activated sludge solids-liquid separation tank and the remainder of raw water into the downstream biological treatment tank, and a means for introducing exhaust gas from the pretreatment tank into the biological treatment tank.

# Fig. 1

# Fig. 2

# Fig. 3

# Fig. 4

# Fig. 5

Amount of sludge in the system (kg) vs Time (days), with legend "BOD Sludge load 0.05kg/kg/d"

# Fig. 6

# Fig. 7

## INTERNATIONAL SEARCH REPORT

| | International application No. |
|---|---|
| | PCT/JP01/01251 |

A. CLASSIFICATION OF SUBJECT MATTER
    Int.Cl$^7$   C02F3/12, C02F3/34

According to International Patent Classification (IPC) or to both national classification and IPC

B.   FIELDS SEARCHED

Minimum documentation searched (classification system followed by classification symbols)
    Int.Cl$^7$   C02F3/12, C02F3/34

Documentation searched other than minimum documentation to the extent that such documents are included in the fields searched
    Jitsuyo Shinan Koho          1926-1996     Toroku Jitsuyo Shinan Koho  1994-2001
    Kokai Jitsuyo Shinan Koho  1971-2001     Jitsuyo Shinan Toroku Koho  1996-2001

Electronic data base consulted during the international search (name of data base and, where practicable, search terms used)
    WPI/L "ozone?*oxidation?*waste(f)water*sludge?*IC=C02F-003/12"
    "ozone?*oxidation?*waste(f)water*sludge?*return?"

C.   DOCUMENTS CONSIDERED TO BE RELEVANT

| Category* | Citation of document, with indication, where appropriate, of the relevant passages | Relevant to claim No. |
|---|---|---|
| Y | JP, 9-174071, A (Ebara Corporation), 08 July, 1997 (08.07.97), Claims; page 2, right column, line 48 to page 3, line 10; Fig. 1   (Family: none) | 1-5 |
| Y | Microfilm of the specification and drawings annexed to the request of Japanese Utility Model Application No. 145858/1982 (Laid-open No.48799/1984), (Mitsubishi Electric Corporation), 31 March, 1984 (31.03.84), Claims; Fig. 2   (Family: none) | 1-5 |
| Y | JP, 2000-33393, A (Showa Engineering Co., Ltd.), 02 February, 2000 (02.02.00), page 3, left column, lines 35 to 46   (Family: none) | 4 |
| A | JP, 8-103786, A (Kurita Water Industries Ltd.), 23 April, 1996 (23.04.96), page 4, right column, line 30 to page 5, left column, line 13; Fig. 2   (Family: none) | 1-5 |

☐  Further documents are listed in the continuation of Box C.     ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 April, 2001 (26.04.01) | 15 May, 2001 (15.05.01) |

| Name and mailing address of the ISA/ | Authorized officer |
|---|---|
| Japanese Patent Office | |
| Facsimile No. | Telephone No. |

Form PCT/ISA/210 (second sheet) (July 1992)

19